# EUROPÄISCHE PATENTANMELDUNG

(11) **EP 1 331 787 A1**
(43) Veröffentlichungstag der Anmeldung: **30.07.2003**
(21) Anmeldenummer: 02024714.4
(22) Anmeldetag: 06.11.2002
(51) Int. Cl.: H04L 29/06

(54) **Verfahren für das selektive Routing einer Voice-Over-IP-Verbindung zu einer Servicerufnummer**

(30) Priorität: 18.01.2002 DE 10201807
(71) Anmelder: Deutsche Telekom AG, 53113 Bonn (DE)
(72) Erfinder: Traser, Jörg, 67547 Worms (DE)

(57) **Zusammenfassung**

Die Erfindung betrifft ein Verfahren für das selektive Routing einer Voice-Over-IP-Verbindung zu einer Servicerufnummer, mittels welchem der Nutzer eines über eine Webseite offerierten Serviceangebots gezielt, nämlich nach vom Anbieter des Service festlegbaren Kriterien, auf ein von mehreren Servicerufnummern geroutet werden kann. Das erfindungsgemäße Verfahren soll dies ermöglichen, ohne dass sich hierdurch die Bedienerfreundlichkeit für den Nutzer des Serviceangebots verschlechtert.

Die Aufgabe wird gelöst, indem beim Aufbau der Voice-Over-IP-Verbindung vor den Verfahrensschriftt des Weiterleitens der Verbindung auf die mit dem Voice-Over-IP-Gateway (4) gekoppelte Weiterleitseite eine Selektionsroutine (3) geschaltet wird. Durch die Routine wird der Nutzer des Serviceangebots zunächst zur Eingabe von mit den Selektionskriterien des Anbieters korrespondierenden Angaben aufgefordert: Die Angaben werden auswertet und das Routing erfolgt entsprechend dem Ergebnis der Auswertung. Dabei werden ergebnisabhängig unterschiedliche Weiterleitseiten angesprungen.

## Beschreibung

Die Erfindung betrifft ein Verfahren für das selektive Routing einer Voice-Over-IP-Verbindung zu einer Servicerufnummer, mittels welchem der Nutzer eines über eine Webseite offerierten Serviceangebots gezielt auf eine von mehreren Servicerufnummern geroutet werden kann.
Viele Warenproduzenten und Dienstleistungsanbieter stellen ihren Kunden Servicerufnummern, so genannte Servicehotlines, zur Verfügung, über welche die Kunden bei am Produkt auftretenden Fehlern oder Problemen bzw. bei Schwierigkeiten im Zusammenhang mit der Erbringung der Dienstleistung oder aber zur Klärung allgemeiner Fragen mit ihnen in Verbindung treten können. Durch das Verschmelzen von Computertechnik und Telekommunikation ist es inzwischen auch üblich geworden, eine Gesprächsverbindung zu einer derartigen Servicerufnummer über einen so genannten Internetcall als Voice-Over-IP-Verbindung herzustellen. Der Nutzer eines entsprechenden Serviceangebots im Internet betätigt hierzu einen Button auf der Internetseite des die Hotline zur Verfügung stellenden Anbieters. Zu diesem Button ist auf dem Internetserver eine Button-ID hinterlegt. Durch die Betätigung des Button wird ein Javascript gestartet, welches für den Nutzer eine weitere Internetseite entsprechend der hinterlegten Button-ID öffnet. Diese Seite wird als Weiterleitseite bezeichnet. Beim Ansprechen der Seite wird zunächst geprüft, ob das System zur Herstellung der Voice-Over-IP-Verbindung online ist. Ist dies der Fall, kann der Kunde bzw. Nutzer in einem weiteren sich öffnenden Browserfenster durch Betätigen entsprechender Bedienelemente einen Rückruf der Hotline veranlassen oder diese unmittelbar selbst kontaktieren. Andernfalls wird er vom System abgewiesen. Sofern das System online ist und der Nutzer die Option einer direkten Verbindung mit dem Serviceanschluss wählt, wird diese Verbindung über die Weiterleitseite und ein Voice-Over-IP-Gateway hergestellt. Vermittels des Gateways werden dabei beim Bestehen der Verbindung die digitalen Internetsignale in analoge Sprachsignale umgewandelt.

Der Betreiber der angerufenen Servicerufnummer kann zwar feststellen, dass die Verbindung über das Internet hergestellt worden ist, jedoch ist es ihm nicht möglich, zu lokalisieren, von welchem Ort der Verbindungsaufbau erfolgte. Für die Betreiber, der zumeist in Call-Centern auflaufenden Servicerufnummern ist es jedoch aus unterschiedlichen Gründen häufig von Interesse den Ursprungsbereich einer Verbindung näher eingrenzen zu können oder den Anrufer mit einer bestimmten von mehren möglichen Servicerufnummern zu verbinden. So ist es etwa für einen überregional tätigen Anbieter, der seinen Kunden einen schnellen Vor-Ort-Service zur Verfügung stellen möchte, unumgänglich feststellen zu können an welchem Ort, der Kunde, bei dem eventuelle Schwierigkeiten mit dem Produkt aufgetreten sind, seinen Sitz hat. Nur wenn er den Sitz kennt, kann er einen Servicetechniker vom nächstgelegenen Servicestandort mit der Lösung des Problems betrauen und auf diese Weise einen schnellen und effizienten Service sicherstellen. Beim Service eingehende Anrufe der Kunden sollten daher, je nach deren Sitz bei unterschiedlichen Rufnummern auflaufen. Hat aber der Kunde die Verbindung als Voice-Over-IP-Verbindung über das Internet hergestellt, so ist die Lokalisierung seines Sitzes wie bereits dargestellt auf Grund des starren Routings beim gegenwärtigen Stand der Systeme nicht möglich. Die einzige Möglichkeit einer Abhilfe besteht derzeit darin, auf der Internetseite, auf welcher der Zugang zum Service angeboten wird, mehrere entsprechend gekennzeichnete Button zu platzieren und auf diese Weise eine den jeweiligen Bedürfnissen gerecht werdende Differenzierung zu ermöglichen. Darunter leidet jedoch die Übersichtlichkeit der Seite, so dass die Kunden unter Umständen verunsichert werden.

Aufgabe der Erfindung ist es daher, ein Verfahren bereitzustellen, welches im Interesse des Betereibers einer Hotline ein selektives Routing von Voice-Over-IP-Verbindungen zu einer von mehreren möglichen Servicerufnummern gestattet, ohne dass sich hierdurch die Bedienerfreundlichkeit für die Nutzer des Serviceangebots verschlechtert.

Die Aufgabe wird durch ein Verfahren mit den Merkmalen des Hauptanspruchs gelöst. Vorteilhafte Aus- bzw. Weiterbildungen der Erfindung sind durch die Unteransprüche gegeben.
Das erfindungsgemäße Verfahren ermöglicht das selektive Routing einer Voice-Over-IP-Verbindung zu einer von mehreren möglichen Servicerufnummern anhand vom Anbieter des Services festlegbarer Kriterien. Dazu wird, abweichend von dem bisher üblichen Ablauf beim Herstellen der Verbindung über das Internet, nach der Betätigung des Button, mit welchem der Nutzer den Wunsch zur Herstellung der Gesprächsverbindung mit der Servicerufnummer signalisiert, eine dem Routing vorgeschaltete Routine (Selektionsroutine) gestartet. Die Selektionsroutine fordert den Nutzer des Angebots zur Eingabe von mit den Selektionskriterien des Anbieters korrespondierenden Angaben auf, wertet diese Angaben aus und führt das Routing entsprechend dem Ergebnis der Auswertung dieser Angaben durch. In dem Ablauf zum Aufbau der Voice-Over-IP-Verbindung ist also gemäß der Erfindung die Selektionsroutine vor den Verfahrensschritt des Weiterleitens der Verbindung auf die mit dem Voice-Over-IP-Gateway gekoppelte Weiterleitseite geschaltet, wobei in erfindungswesentlicher Weise in Abhängigkeit des Ergebnisses der von der Routine vorgenommenen Auswertung unterschiedliche Weiterleitseiten angesprungen werden.
Gemäß einer bevorzugten Ausführungsform der Erfindung handelt es sich bei der Selektionsroutine um ein selbststartendes Javascript. Entsprechend einer besonders vorteilhaften Ausgestaltung des erfindungsgemäßen Verfahrens wird durch die Selektionsroutine, zur Abfrage der mit den Selektionskriterien für die Ableitung der jeweiligen Servicerufnummer korrespondierenden Informationen, ein strukturiertes Eingabeformular für den Nutzer generiert. Die Abfrage der mit den Selektionskriterien korrespondierenden Informationen kann dabei über eine manuelle Tastatureingabe oder aber auch vermittels Steuerelementen eines HTML-basierten Formulars, also beispielsweise durch die Aktivierung entsprechender Button oder Elemente eines Pull-Down-Menüs mit der Mouse erfolgen.
Als Selektionskriterium kommen unterschiedliche Angaben in Betracht. Eine Möglichkeit, insbesondere im Hinblick auf die Lokalisierung des Sitzes eines Nutzers, besteht in der Abfrage der Postleitzahl. Eine andere praxisrelevante Möglichkeit besteht darin, nach der Art des aufgetretenen Problems zu selektieren und den Nutzer dementsprechend mit unterschiedlichen Ansprechpartnern zu verbinden, welche beispielsweise entweder für die Beratung bei technischen Problemen oder für die Beantwortung von Fragen im Zusammenhang mit der Bezahlung einer Ware oder der Abrechnung einer Dienstleistung zuständig sind. Darüber hinaus kommt als Selektionskriterium aber auch, ein dem Nutzer zugewiesenes oder von ihm früher festgelegtes Passwort in Betracht. Vorteilhafterweise kann das Verfahren außerdem so ausgestaltet sein, dass die jeweilige Servicerufnummer aus einer Kombination wenigstens zweier Selektionskriterien abgeleitet wird.
In Abkehr von dem bisher starren Routing beim Herstellen von Voice-Over-IP-Verbindungen zu Servicerufnummern wird also gemäß der Erfindung dem Anspringen der Weiterleitseite eine Routine vorgeschaltet, durch welche Informationen eingeholt und ausgewertet werden, welche das Anspringen unterschiedlicher Weiterleitseiten zur Folge haben. Die starre Verkopplung der jeweiligen Weiterleitseite mit einer bestimmten Rufnummer über ein Voice-Over-IP-Gateway bleibt hingegen erhalten.

Die Erfindung soll nachfolgend anhand eines Ausführungsbeispiels nochmals näher erläutert werden. In den zugehörigen Zeichnungen zeigen:
- Fig. 1:: Ein grobes Ablaufschema des erfindungsgemäßen Verfahrens.
- Fig. 2: Das Schema einer Selektionsroutine, bei welcher die Auswahl der jeweiligen Servicerufnummer in Abhängigkeit der unterschiedlichen Zuständigkeit der Ansprechpartner einer Hotline erfolgt.

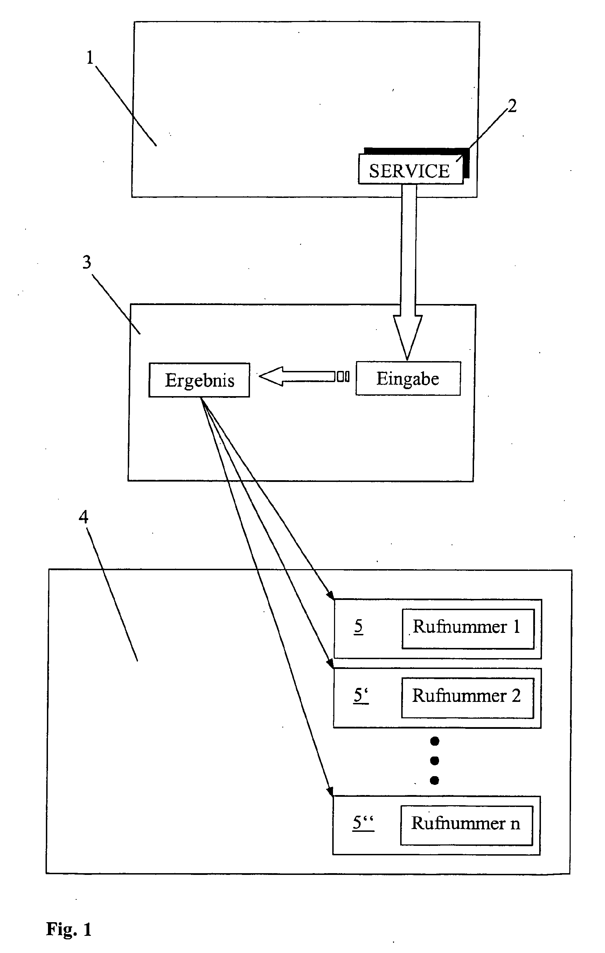

Durch die Figur 1 ist ein grobes Ablaufschema für das erfindungsgemäße Verfahren dargestellt. In an sich bekannter Weise ist auf der Web- bzw. Internetseite 1 eines Waren- oder Dienstleistungsanbieters ein Button 2 platziert durch dessen Anklicken der Nutzer mit einer Servicerufnummer in Verbindung treten kann. Gemäß dem Stand der Technik wird der Nutzer nach dem Betätigen des Button 2 lediglich noch dazu aufgefordert, anzugeben, ob er unmittelbar telefonisch mit dem Anbieter in Verbindung treten will oder ob er die Möglichkeit eines so genannten Callback (der Betreiber der Servicerufnummer ruft ihn später zurück) nutzen möchte. Danach erfolgt unmittelbar das Routing. Hiervon abweichend wird nach dem erfindungsgemäßen Verfahren zunächst eine Selektionsroutine 3 gestartet. Durch die Selektionsroutine 3 wird der Nutzer zur Eingabe bestimmter Informationen aufgefordert. Vorteilhafterweise geschieht dies mittels eines strukturierten Formulars. Entsprechend der sicherlich für die Praxis relevantesten Ausführungsform wird der Nutzer beispielsweise zur Eingabe der Postleitzahl oder seines Wohnortes aufgefordert. Diese Angabe wird durch die Selektionsroutine 3 ausgewertet und die IP-Verbindung schließlich in Abhängigkeit des daraus resultierenden Ergebnisses auf unterschiedliche, mit einem Voice-Over-IP-Gateway 4 gekoppelte Weiterleitseiten 5, 5', 5" geführt. Jede der Weiterleitseiten 5, 5', 5" ist über das Voice-Over-IP-Gateway 4 starr mit einer jeweiligen Servicerufnummer (Rufnummer 1 bis n) verbunden. Der Kunde wird also in Abhängigkeit seines Wohn- oder Geschäftssitzes zunächst auf unterschiedliche Weiterleitseiten 5, 5', 5" und von hier auf unterschiedliche Servicerufnummern geroutet. Er wird so unmittelbar mit dem für ihn zuständigen Servicestützpunkt bzw. dessen Annahmestelle verbunden.

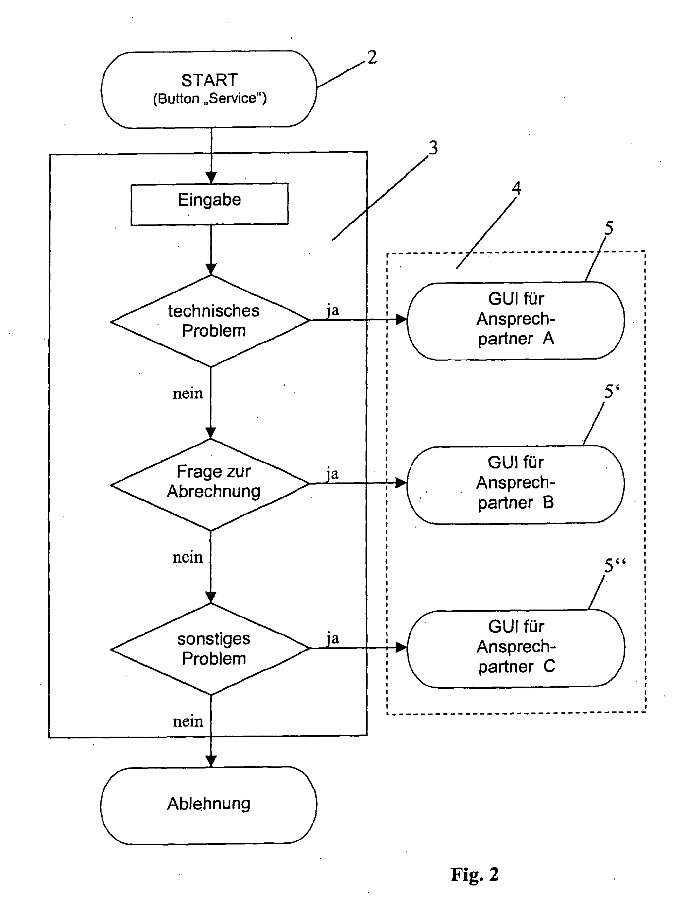

In der Figur 2 ist beispielhaft das Blockdiagramm einer Selektionsroutine 3 dargestellt, vermittels welcher das Routen zu einer bestimmten Servicerufnummer nicht in Abhängigkeit des Wohnortes, sondern in Abhängigkeit des jeweils zu lösenden Problems und des insoweit hierfür zuständigen Ansprechpartners A, B oder C erfolgt. Nach dem Drücken des beispielsweise mit "Service" bezeichneten Button 2 auf der Webseite eines Waren- oder Dienstleistungsanbieters wird die Selektionsroutine 3 gestartet. Beim Ablauf der Routine 3 wird der Kunde beispielsweise mittels eines Formulars dazu aufgefordert, Angaben über die Art seines Problems zu machen. Hieraus leitet sich dann unmittelbar ab, welcher Ansprechpartner A, B oder C im jeweiligen Fall zuständig ist. Im dargestellten Schema ist beispielsweise Ansprechpartner A zuständig für die Lösung technischer Probleme, Ansprechpartner B für die Lösung von Abrechnungsproblemen und Ansprechpartner C für sonstige Probleme. Gibt der Kunde an, dass er ein technisches Problem mit dem Produkt hat, wird er zu einer Weiterleitseite 5 geführt, welche vermittels des Voice-Over-IP-Gateways 4 starr mit der Servicerufnummer des für technische Probleme zuständigen Bearbeiters bzw. Ansprechpartners A verbunden ist. Auf dieser, vorzugsweise mit einer graphischen Benutzeroberfläche (so genanntes GUI - Graphical User Interface) ausgestatteten Weiterleitseite 5 wird er dann lediglich noch in bekannter Weise dazu aufgefordert, anzugeben, ob er unmittelbar eine Gesprächsverbindung mit dem Ansprechpartner A wünscht oder ob er von diesem im Callback-Verfahren später zurückgerufen werden möchte. Wünscht der Kunde einen sofortigen Kontakt wird er nach der Betätigung eines entsprechenden Button in einem Browserfenster der Weiterleitseite 5 unmittelbar mit der Servicerufnummer des zuständigen Bearbeiters A verbunden. In analoger Weise wird der Kunde im Bedarfsfall nach entsprechenden Eingaben auf die Weiterleitseite 5' geführt und folglich mit dem für die Klärung finanzieller Fragen zuständigen Ansprechpartner B oder über die Weiterleitseite 5" mit dem für alle allgemeinen bzw. übrigen Fragen zuständigen Ansprechpartner C verbunden. Wählt er keine dieser Optionen wird er vom System abgewiesen.

### Liste der verwendeten Bezugszeichen

- 1: Internetseite bzw. Webseite
- 2: Button
- 3: Selektionsroutine
- 4: Voice-Over-IP-Gateway (Weiterleitsystem)
- 5, 5', 5": Weiterleitseite
- A, B, C: Bearbeiter bzw. Ansprechpartner

## Patentansprüche

1. Verfahren für das selektive Routing einer Voice-Over-IP-Verbindung zu einer von mehreren möglichen Servicerufnummern, bei dem der Nutzer eines über eine Webseite (1) offerierten Serviceangebots über ein Voice-Over-IP-Gateway (4) mit der jeweiligen Servicerufnummer nach vom Anbieter des Service festlegbaren Kriterien (Selektionskriterien) verbunden wird, indem nach der Betätigung eines Buttons (2), mit dem der Nutzer den Wunsch zur Herstellung einer Gesprächsverbindung mit dem Serviceanbieter signalisiert, eine dem Routing vorgeschaltete Routine (Selektionsroutine 3) gestartet wird, vermittels welcher der Nutzer zur Eingabe von mit den Selektionskriterien korrespondierenden Angaben aufgefordert wird, diese Angaben ausgewertet werden und entsprechend dem Ergebnis der Auswertung das Routing zur jeweiligen Servicerufnummer durchgeführt wird.

2. Verfahren nach Anspruch 1, **dadurch gekennzeichnet, dass** es sich bei der Selektionsroutine (3) um ein selbststartendes Javascript handelt.

3. Verfahren nach Anspruch 1 oder 2, **dadurch gekennzeichnet, dass** zur Abfrage der mit den Selektionskriterien zur Ableitung der jeweiligen Servicerufnummer korrespondierenden Informationen durch die Selektionsroutine (3) ein strukturiertes Eingabeformular generiert wird.

4. Verfahren nach Anspruch 3, **dadurch gekennzeichnet, dass** die Abfrage der mit den Selektionskriterien korrespondierenden Informationen vermittels Steuerelementen eines HTML-basierten Formulars erfolgt.

5. Verfahren nach Anspruch 1 oder 3, **dadurch gekennzeichnet, dass** als Selektionskriterium die Postleitzahl des Nutzers dient.

6. Verfahren nach Anspruch 1 oder 3, **dadurch gekennzeichnet, dass** als Selektionskriterium ein dem Nutzer zugewiesenes oder von im früher festgelegtes Passwort dient

7. Verfahren nach Anspruch 1 oder 3, **dadurch gekennzeichnet, dass** die jeweilige Servicerufnummer aufgrund einer Kombination wenigstens zweier Selektionskriterien abgeleitet wird.
